(19) Europäisches Patentamt
European Patent Office
Office européen des brevets

(11) EP 1 068 159 B1

(12) **FASCICULE DE BREVET EUROPEEN**

(45) Date de publication et mention de la délivrance du brevet:
**02.01.2004 Bulletin 2004/01**

(21) Numéro de dépôt: **99909037.6**

(22) Date de dépôt: **18.03.1999**

(51) Int Cl.[7]: **C04B 24/42**, C04B 28/14
// (C04B28/14, 24:38, 24:38), C04B24:42, C04B111:27

(86) Numéro de dépôt international:
**PCT/FR1999/000626**

(87) Numéro de publication internationale:
**WO 1999/050200 (07.10.1999 Gazette 1999/40)**

(54) **PROCEDE D'HYDROFUGATION DU PLATRE METTANT EN OEUVRE AU MOINS UN ALKYLHYDROGENOPOLYSILOXANE ET AU MOINS UN HYDROCOLLOIDE**

VERFAHREN ZUR HYDROPHOBIERUNG VON GIPS UNTER VERWENDUNG VON MINDESTENS EINES ALKYLHYDOGENPOLYSILOXANS UND MINDESTENS EINES HYDROKOLLOIDES

METHOD FOR DAMP-PROOFING GYPSUM PLASTER USING AT LEAST AN ALKYLHYDROGENOPOLYSILOXANE AND AT LEAST A HYDROCOLLOID

(84) Etats contractants désignés:
**AT BE CH DE DK ES FI FR GB GR IE IT LI LU NL PT SE**

(30) Priorité: **31.03.1998 FR 9803967**

(43) Date de publication de la demande:
**17.01.2001 Bulletin 2001/03**

(73) Titulaire: **RHODIA CHIMIE**
**92408 Courbevoie Cédex (FR)**

(72) Inventeurs:
- **FRANZONI, Christine**
  **F-69530 Brignais (FR)**
- **GOUBET, Sandrine**
  **F-69007 Lyon (FR)**
- **PRAT, Evelyne**
  **F-93500 Pantin (FR)**
- **ROCHER, Laurent**
  **F-69550 Saint-Romain en Gal (FR)**
- **SARI, Mustapha**
  **F-69100 Villeurbanne (FR)**

(56) Documents cités:
**EP-A- 0 067 074**
**CH-A- 432 334**
**US-A- 3 751 926**
**US-A- 5 135 805**
**US-A- 5 624 481**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention est relative à un procédé d'hydrofugation du plâtre, et d'objets moulés en plâtre.

Le plâtre, de formule chimique $CaSO_4.1/2\ H_2O$, résulte de la calcination à une température d'environ 140°C du gypse naturel ou synthétique.

Lorsque la calcination se fait à pression atmosphérique, on obtient du plâtre β (plâtre de construction).

Si cette calcination est faite à une pression supérieure à la pression atmosphérique, du plâtre a est obtenu.

La calcination du gypse ($CaSO_4.2\ H_2O$) à une température supérieure à 600°C, produira de l'anhydrite ($CaSO_4$). Il existe aussi des anhydrites de synthèse, comme par exemple le fluoroanhydrite. Il est à noter que l'anhydrite ($CaSO_4$) peut également exister à l'état naturel, sous forme de roche.

Le sulfate de calcium sous forme semi-hydratée ou anhydre (plâtres α, β, et anhydrite synthétique ou naturelle), lors du mélange avec l'eau ou gâchage peut conduire à la formation de gypse de formule $CaSO_4.2\ H_2O$. Le gypse est un produit sensible à l'eau et présente une solubilité d'environ 2,0 g/l à 20°C.

Dans le cadre de la présente invention, le terme "plâtre" désignera indifféremment toutes les phases précitées, qui, après rehydratation, donnent du gypse ($CaSO_4.2\ H_2O$).

Dans les différentes applications du plâtre, il est important d'avoir un matériau qui présente des propriétés mécaniques durables. De même, il est important que le matériau durci conserve les propriétés d'origine (forme, couleur etc.) après contact avec l'humidité.

Pour cela Il faut hydrofuger le plâtre, c'est-à-dire le rendre peu sensible voire totalement insensible à la pénétration de l'eau.

C'est dans le but d'améliorer la résistance du plâtre à l'eau que l'on a été amené à traiter le plâtre en surface ou dans la masse. Dans le cas d'une hydrofugation dans la masse, le traitement a lieu in situ, au moment de la confection des objets manufacturés en plâtre, en général, par ajout d'un composé hydrofugeant dans l'eau de gâchage.

L'utilisation des alkylhydrogénopolysiloxanes seuls pour hydrofuger le plâtre dans la masse est déjà connue. Après hydrolyse, les alkylhydrogénopolysiloxanes conduisent, en général, à la formation de réseaux alkylhydrogénopolysiloxaniques hydrophobes.

L'inconvénient majeur des alkylhydrogénopolysiloxanes lorsqu'ils sont utilisés seuls, en tant qu'hydrofugeants, est que dans certaines conditions opératoires notamment à température élevée (à partir d'environ 120°C), ces composés peuvent partiellement donner naissance à des poussières de silice, qui par son caractère pulvérulent, peut nuire au fonctionnement des appareils de convoyage. Ceci se traduira par un arrêt des installations, pénalisant ainsi la fabrication.

Par ailleurs, selon le pH du plâtre, des dégagements plus ou moins violents d'hydrogène peuvent se produire avec des alkylhydrogénopolysiloxanes utilisés seuls comme hydrofugeant, ce qui pose des problèmes de sécurité et de qualité de fabrication.

De plus, la propriété antimousse des alkylhydrogénopolysiloxanes pose des problèmes de recyclage des plâtres qui les contiennent.

Enfin, on peut rencontrer des problèmes d'efficacité d'hydrofugation en utilisant des alkylhydrogénopolysiloxanes seuls avec certains types de plâtre, en particulier avec les plâtres d'origine synthétique.

La présente invention a principalement pour but de pallier les inconvénients mentionnés ci-dessus en proposant un procédé d'hydrofugation amélioré de plâtre mettant en oeuvre les alkylhydrogénopolysiloxanes en quantité réduite, et qui permet d'obtenir et de conserver un matériau dont la sensibilité à la pénétration de l'eau est considérablement diminuée et ce de façon durable.

Ces buts sont atteints par la présente invention qui a pour objet un procédé d'hydrofugation du plâtre mettant en oeuvre notamment les alkylhydrogénopolysiloxanes et un hydrocolloïde.

Par procédé "d'hydrofugation de plâtre", on entend un procédé qui rend le plâtre imperméable à la pénétration de l'eau liquide, aussi bien de l'extérieur vers l'intérieur que de l'intérieur vers l'extérieur du plâtre, tout en conservant la perméabilité du plâtre dans les deux sens à la vapeur d'eau.

L'invention a pour objet un procédé d'hydrofugation du plâtre, caractérisé en ce que l'on ajoute au plâtre, au moins un composé (A) comprenant au moins un alkylhydrogénopolysiloxane tel que défini dans la revendication 1, et au moins un hydrocolloïde (B) comprenant au moins un galactomannane.

Le procédé selon la présente invention peut, en outre, permettre un recyclage facile des plâtres traités.

Il peut aussi, dans certaines conditions, conduire à un plâtre hydrofugé du type ci-dessus, dont les propriétés mécaniques sont conservées voire améliorées.

De plus, le procédé selon la présente invention peut conduire à une bonne qualité d'hydrofugation même avec des plâtres d'origine synthétique.

Plus particulièrement, le procédé de l'invention consiste à mélanger à une poudre de plâtre, au moins un composé (A) comprenant au moins un alkylhydrogénopolysiloxane tel que défini dans la revendication 1, au moins un hydrocolloïde (B) comprenant au moins un galactomannane, et de l'eau.

Le premier constituant essentiel mis en oeuvre dans le procédé de t'invention est le composé (A) qui consiste en au moins un alkylhydrogénopolysiloxane linéaire ou cyclique, ou un mélange de linéaires et de cycliques, de formules moyennes (I) et (II) :

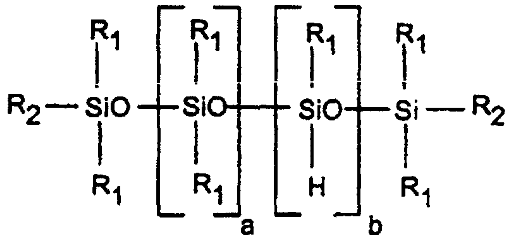

(I)

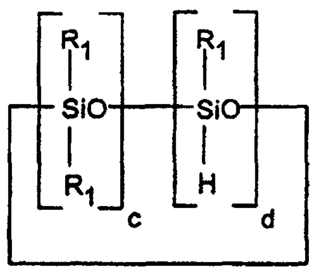

(II)

dans lesquelles :

- a et b sont des nombres entiers ou fractionnaires, définis comme :
  - $0 \leq a \leq 500$, de préférence $0 \leq a \leq 99$
  - $0 \leq b \leq 500$, de préférence $1 \leq b \leq 100$
  - $5 \leq a + b \leq 1000$, de préférence $10 \leq a + b \leq 150$
- c et d sont des nombres entiers ou fractionnaires, définis comme :
  - $0 \leq c \leq 5$, de préférence $0 \leq c \leq 3$
  - $1 \leq d \leq 10$, de préférence $1 \leq d \leq 5$
  - $3 \leq c + d \leq 10$, de préférence $3 \leq c + d \leq 5$
- $R_1$, identiques ou différents, représentent un radical hydrocarboné monovalent comportant 1 à 8 atomes de carbone choisi parmi :
  - les radicaux alkyles linéaires ou ramifiés, notamment les radicaux méthyle, éthyle, propyle, isopropyle, tertiobutyle, n-hexyle, n-octyle,
  - les radicaux insaturés phényle, éventuellement substitué par un radical méthyle et/ou un radical éthyle,
- lorsque $b > 0$, $R_2$, identiques ou différents, représentent un atome d'hydrogène et/ou un radical hydrocarboné monovalent comportant 1 à 8 atomes de carbone choisi parmi :
  - les radicaux alkyles linéaires ou ramifiés, notamment les radicaux méthyle, éthyle, propyle, isopropyle, tertiobutyle, n-hexyle, n-octyle,
  - les radicaux insaturés phényle, éventuellement substitué par un radical méthyle et/ou un radicale éthyle,
- lorsque $b = 0$, au moins un des radicaux $R_2$, représente un atome d'hydrogène, les autres radicaux $R_2$, identiques

ou différents, représentant un radical hydrocarboné monovalent comportant 1 à 8 atomes de carbone choisi parmi :

- ☐ les radicaux alkyles linéaires ou ramifiés, notamment les radicaux méthyle, éthyle, propyle, isopropyle, tertiobutyle, n-hexyle, n-octyle,
- ☐ les radicaux insaturés phényle, éventuellement substitué par un radical méthyle et ou un radical éthyle.

De préférence, le composé (A) consiste en au moins un alkylhydrogénopolysiloxane linéaire de formule moyenne (I) dans laquelle :

- ■ les radicaux $R_1$ et $R_2$ représentent les radicaux alkyles linéaires comportant 1 à 3 atomes de carbone choisis parmi les radicaux méthyle, éthyle, propyle, et de préférence le méthyle,
- ■ a et b sont des nombres entiers ou fractionnaires, définis comme :
  - ☐ $0 \leq a \leq 99$, de préférence $0 \leq a \leq 50$
  - ☐ $1 < b \leq 100$, de préférence $10 \leq b \leq 80$
  - ☐ $10 < a + b \leq 150$, de préférence $20 < a + b \leq 100$

Le composé (A) précité consiste en au moins un alkylhydrogénopolysiloxane pouvant présenter une viscosité d'au plus 200 mPa.s, et de préférence de 5 à 50 mPa.s.

Dans la suite de l'exposé, la viscosité est déterminée avec un viscosimètre BROOKFIELD à 25°C et 20 tours/minute.

Un paramètre important pour la définition des alkylhydrogénopolysitoxanes (A) de l'invention est le pourcentage de radicaux hydrogène (motifs ≡SiH). Les meilleurs résultats sont obtenus avec les alkylhydrogénopolysiloxanes (A) ayant préférentiellement un pourcentage de motifs ≡SiH compris entre 0,05 et 5 % en poids d'hydrogène par rapport au poids du composé (A), et de préférence entre 0,3 et 2 % en poids d'hydrogène par rapport au poids du composé (A).

Les alkylhydrogériopolysiloxanes (A) se présentent habituellement sous forme d'une huile.

Ils peuvent être mis en oeuvre à l'état pur, dilué dans un solvant organique, en émulsion, ou sous forme de poudre lorsqu'ils sont fixés sur un support pulvérulent.

Ils seront mis en oeuvre, de préférence, à l'état pur, sous forme d'émulsion aqueuse, ou de concentrés émulsionnables, en présence de tensioactifs appropriés.

Habituellement, les alkylhydrogénopolysiloxanes sont présents dans une quantité d'au moins 0,3 % en poids par rapport à la poudre de plâtre, pour avoir les propriétés d'hydrofugation requises selon les normes d'hydrofugation :

absorption d'eau < 5 % après 2 heures d'immersion dans l'eau
absorption d'eau < 10 % après 24 heures d'immersion

La présente invention permet de diminuer la dose habituelle des alkylhydrogénopolysiloxanes (A), à une quantité d'au plus 0,25 %, et de préférence d'au plus 0,15 % en poids par rapport à la poudre de plâtre pour satisfaire les normes précitées.

Le deuxième constituant essentiel mise en oeuvre dans le procédé de l'invention est l'hydrocolloïde (B) qui consiste en au moins un galactomannane.

Les galactomannanes sont des polysaccharides constitués par un enchaînement de monomères du type mannose et galactose. Parmi les galactomannanes on choisit plus particulièrement la gomme guar.

La gomme guar est un hydrocolloïde naturel stocké comme matière de réserve dans l'endosperme de la graine de guar. C'est également un galactomannane dont la molécule présente une configuration très spécifique. Le squelette de la macromolécule est constitué par une longue chaîne d'unités de mannose reliées entre elles par une liaison 1,4-β-glycosidique. Statistiquement, une molécule de mannose sur deux porte, comme ramification, un galactose fixé par une liaison 1,6-α.

La gomme guar naturelle peut subir des modifications chimiques permettant de varier considérablement ses propriétés, tout en conservant les caractéristiques de base.

Ainsi, les groupes hydroxyles libres de la gomme de guar peuvent être substitués par des réactions d'étherification ou d'estérification, produisant par exemple des dérivés carboxyalkylés, hydroxyalkylés, et phosphatés. Les réactions d'étherification ou d'estérification sont connues en soi, notamment dans la chimie de la cellulose et de l'amidon.

Il est également possible de substituer les groupes hydroxyles libres de la gomme de guar pour produire des guars cationiques et amphotères.

Dans le cadre de la présente invention, l'hydrocolloïde (B) est de préférence choisi parmi les gatactomannanes

non ioniques dont au moins une partie des groupes hydroxyles est substituée par des groupes hydroxyalkyles. Plus particulièrement, l'hydrocolloïde (B) est une gomme de guar non ionique dont au moins une partie des groupes hydroxyles est substituée par des groupes hydroxyalkyles, dont le groupe alkyle contient de 2 à 4 atomes de carbone. Ces guars non ioniques, appelés également des hydroxyalkyléthers de guars, peuvent être choisis parmi les hydroxyéthyles guars, les hydroxypropyles guars, et les hydroxybutytes guars.

(B) est de préférence un hydroxypropyle guar.

Les hydroxyalkyléthers de guar selon l'invention, peuvent être préparés selon les méthodes connues de l'homme du métier, par exemple celle décrite dans le brevet canadien No. 1075727, notamment par réaction d'une gomme guar avec un oxyde d'alkylène, par exemple l'oxyde d'éthylène, l'oxyde de propylène, et l'oxyde de butylène, en présence d'un catalyseur comme un hydroxyde d'alcalin comme le NaOH, un alcalinoterreux, ou de l'ammoniaque.
La réaction peut avoir lieu à une température variant entre 15 °C et 130°C.
Habituellement, dans la gomme guar, chaque monomère mannose (et/ou galactose) peut présenter, en moyenne, trois fonctions hydroxyles capables de réagir avec l'oxyde d'aikylène. Ainsi, le degré de substitution molaire d'un hydroxyalkyléther d'un polymère en général, et d'un hydroxyalkyléther guar en particulier, peut être défini comme le nombre de moles d'oxyde d'alkylène additionné par unité d'hexose dans un polymère en général, et dans le guar en particulier.
Le degré de substitution molaire de l'hydrocolloïde (B), et en particulier de l'hydroxyalkyléther de guar selon l'invention, peut être compris entre 0,2 et 0,9, et de préférence entre 0,3 à 0,7.
La masse moléculaire moyenne en poids (Mw) de l'hydrocolloïde (B) peut varier entre 50 000 et 2 000 000, et de préférence entre 200 000 et 1 500 000.
La masse moléculaire moyenne en poids (Mw) est représentée par la formule suivante :

$$M_w = \frac{\Sigma_i\, N_i\, [M_i]^2}{\Sigma_i\, N_i\, M_i}$$

dans laquelle :

$N_i$ = nombre de moles de polymère de l'espèce i,
$M_i$ = masse moléculaire du polymère de l'espèce i.

L'hydrocolloïde (B) est habituellement sous forme de solide. Son incorporation dans un milieu donné permet de moduler la viscosité et les propriétés rhéologiques dudit milieu selon les exigences spécifiques souhaitées.
Ainsi, pour une dispersion à 1 % d'hydrocolloïde (B) dans un milieu donné, en particulier dans l'eau, la viscosité est avantageusement d'au plus 1500 mPa.s. Cette viscosité est plus particulièrement comprise entre 500 et 1100 mPa.s, par exemple environ 1000 mPa.s.
La teneur en hydrocolloïde (B) est comprise entre 0,05 % à 0,5 % en poids, de préférence entre 0,05 % et 0,3 % en poids, et plus particulièrement entre 0,10 % et 0,25 % en poids par rapport à la poudre de plâtre.
Comme produits commerciaux d'hydrocolloïde (B), on citera à titres d'exemples non limitatifs les produits des séries disponibles dans le commerce, on peut citer notamment le RHOXIMAT RH 148, le JAGUAR HP 140, le JAGUAR 8000, le JAGUAR 8200, le JAGUAR 8801, et le JAGUAR HP 8 de la Société RHODIA.
L'hydrofugation de plâtre peut être effectuée selon les méthodes connues de l'homme du métier, par exemple en mélangeant une poudre de plâtre, un composé (A) comprenant au moins un alkylhydrogénopolysiloxane, un hydrocolloïde (B) comprenant au moins un galactomannane, et de l'eau.
On peut procéder, par exemple, de la manière suivante :

i) prémélanger le composé (A) et l'hydrocolloïde (B) dans l'eau de gâchage,
ii) introduire le plâtre dans le prémélange,
iii) mettre en forme le plâtre et laisser prendre, et
iv) sécher le plâtre dans une étuve jusqu'à masse constante.

L'eau de gâchage peut contenir d'autres additifs (qui peuvent également être incorporés dans la pâte fraîche) notamment des agents fluidifiants ou dispersants du plâtre, et/ou des agents moussants.
Comme agent fluidifiant ou dispersant, on peut citer les phosphates condensés, le tripolyphosphate de sodium, l'hexamétaphosphate de sodium, les poly(méth)acrylate de méthyles, d'éthyle, ou de sodium, les acides poly (méth)acryliques, les amides poly(méth)acryliques, les phosphonates -organiques notamment le méthylène phosphonate, les polysuifonates notamment les lignosulfonates, les sulfonates de pétrole, les sulfonates de polystyrène, les polycondensés sulfonés notamment le polycondensé sulfoné de naphtalène et de formaldéhyde, les polymaléates sous forme acide et/ou sel d'alcalin, les tannins, les lignines, les glucosides, les gluconates, les alginates, les phosphoesters, et les phospho glasses. Ces composés et d'autres sont décrits dans :"Kirk-Othmer, Encyclopedia of Chemical Technology, Third Edition, Volume 7, 1979, pages 833-846" dont le contenu fait partie intégrante de cette description.

A titre d'agents moussants on peut citer les familles de tensioactifs de type alkyle ether sulfate de sodium ou d'ammonium, les lauryl ethers sulfates de sodium ou d'ammonium, les cocoamphodiacétates dialkylsulfosuccinates de sodium, les alcools ethoxytés, les alcools gras éthoxylés, les sucroglycerides, les huiles de ricin ou de coprah ethoxylés, et les bétaïnes. A ce titre, on peut utiliser les agents moussants commerciaux, par exemple le RHODASURF 860 P, le RHOCAFOAM AN 45, le RHOCAFOAM AMP 10, le RHOCAFOAM AB 20, le RHOXIMAT TG 80, le RHOCAFOAM AN 30, commercialisés par RHODIA.

Comme déjà mentionné, l'hydrocolloïde (B) est habituellement sous forme de solide. Le composé (A) peut être sous forme d'une huile pure, diluée en solution, en émulsion telle que définie précédemment, ou sous forme de concentré émulsionnable. Concentré émulsionnable signifie que le composé (A) additivé de tensioactifs, permet une mise en émulsion immédiate en cas de contact avc de l'eau.

Dans un tel cas, l'invention aura pour objet un procédé d'hydrofugation de plâtre, caractérisé en ce que l'on ajoute au plâtre une composition comprenant :

- au moins un hydrocolloïde (B) comprenant au moins un galactomannane sous forme solide tel que défini ci-dessus, et
- au moins un composé (A) comprenant au moins un alkylhydrogénopolysiloxane tel que définis ci-dessus, sous forme d'huile pure, dilué en solution, en émulsion, ou sous forme de concentré émulsionnable.

Lorsque les composés (A) et (B) sont tous les deux solides, le prémélange sera sous forme d'une composition pulvérulente.

Le composé (B) étant habituellement sous forme solide, il se pose alors le problème du composé (A).

Comme déjà indiqué, le composé (A) est de préférence une huile. Il est rendu solide, de préférence, par imprégnation d'un support solide minéral par exemple à base de silice, de carbonate de calcium, de plâtre ($CaSO_4$. 1/2 $H_2O$), de gypse, ou tout autre charge minérale ou organique inerte.

L'imprégnation se fait de manière connue, par mise en contact du support solide avec le composé (A) pur, ou avec une solution ou une émulsion comprenant le composé (A).

L'opération est en général réalisée par trempage du support solide dans un volume déterminé pur de composé (A), ou dans un volume déterminé d'une solution ou d'une émulsion comprenant le composé (A). Il est également possible d'imprégner le support solide par trempage de celui-ci dans le composé (A) pur, ou dans la solution ou l'émulsion comprenant le composé (A), et éliminer l'excès de solution par égouttage.

La mise sur support peut également être effectuée par pulvérisation du composé (A) pur, ou de la solution ou de l'émulsion comprenant le composé (A) directement sur le support dans un mélangeur par exemple du type Lödige ou Forberg.

Ainsi, l'invention aura également pour objet une composition pulvérulente comprenant :

- au moins un hydrocolloïde (B) comprenant au moins un galactomannane tel que défini ci-dessus, et
- un solide à base d'au moins un composé (A) supporté, le composé (A) comprenant au moins un alkylhydrogénopolysiloxane tel que défini ci-dessus.

L'invention concerne également des objets moulés ou sous forme de carreaux ou de plaques. Ces objets sont obtenus à partir du plâtre qui a subi le traitement d'hydrofugation tel que décrit dans l'ensemble de la description.

Enfin, l'invention a pour objet le produit comprenant au moins un composé (A) comprenant au moins un alkylhydrogénopolysiloxane répondant aux formules générales (I) et (II), et au moins un hydrocolloïde (B) comprenant au moins un galactomannane tel que défini ci-dessus, comme produit de combinaison pour une utilisation conjointe dans un procédé d'hydrofugation de plâtre.

Une utilisation conjointe signifie une utilisation des deux constituants (A) et (B) ensemble pour obtenir la propriété hydrofugeante recherchée ; (A) et (B) pouvant être introduits simultanément ou séparément dans le plâtre. Des exemples concrets mais non limitatifs de l'invention vont maintenant être donnés.

## EXEMPLES

### Exemple 1

Matériel :

Le matériel décrit ci-après est le même pour tous les exemples. Il comprend :

- un mélangeur Rayneri et hélice 4 pales, utilisé à la vitesse de 1200 tr/min.
- des moules en acier inoxydable pour éprouvettes de 4 x 4 x 16 $cm^3$
- un bêcher de 2 litres en polypropylène
- une étuve ventilée HERAEUS de type UP 6420

Produits :

Quatre séries de trois éprouvettes de plâtre sont préparées avec 3600 g de plâtre naturel ($CaSO_4$-1/2 $H_2O$).
La série 1 est le plâtre témoin (sans hydrofugeant).
La série 2 est additionnée de 0,3 % en poids par rapport à la poudre de plâtre de polyméthylhydrogénosiloxane bloqué en bout de chaîne par des groupes méthyles de formule $(CH_3)_3$-Si-O-[SiH($CH_3$)-O]$_x$-Si$(CH_3)_3$ avec $45 \leq x \leq 80$ ; appelé également RHOXIMAT H 68, sous forme d'huile pure.
La série 3 est additionnée de 0,1 % en poids par rapport à la poudre de plâtre de RHOXIMAT H 68, sous forme d'huile pure.
La série 4 correspond à du plâtre additionné de 0,1 % en poids par rapport à la poudre de plâtre de H 68, et de 0,2 % en poids par rapport à la poudre de plâtre de guar RHOXIMAT RH 148 qui est un hydroxypropyle guar de masse molaire d'environ 1 200 000 et de degré de substitution molaire d'environ 0,6.
Quelque soit l'échantillon préparé, la quantité d'eau ajoutée est telle que le rapport eau/plâtre reste toujours égal à 0,75.

Préparation :

- Selon l'échantillon préparé, introduire l'eau, le polyméthylhydrogénosiloxane (RHOXIMAT H 68). et le guar (RHOXIMAT RH 148) dans le bêcher. Agiter 15 secondes.
- Ajouter le plâtre en 15 secondes et remélanger en 15 secondes.
- Laisser reposer 30 secondes et remélanger 30 secondes.
- Couler le plâtre dans le moule, tasser, araser et laisser prendre (durée environ 30 minutes)
- Une fois la prise effectuée, démouler et sécher les éprouvettes de plâtre 40 heures à 40°C dans l'étuve ventilée.

Evaluation des propriétés hvdrofuges de ces éprouvettes :

A la sortie de l'étuve, les éprouvettes de plâtre sont laissées refroidir à environ 23°C et 65 % d'humidité relative.
Elles sont immergées dans l'eau potable, sous une hauteur de 1 cm environ, et sont pesés toutes les heures pendant 8 heures puis au bout de 24 heures.

Expression des résultats :

La quantité d'eau absorbée est exprimée en % du poids sec de l'éprouvette au moment t selon la formule :

$$E\% = \frac{E2 - E1}{E1} \times 100$$

E1 = masse de l'éprouvette au temps t = 0
E2 = masse de l'éprouvette au temps t

Chaque produit est testée sur une série de 3 éprouvettes de plâtre.
Les résultats récapitulés dans le Tableau I, correspondent à la moyenne des 3 essais ; ils sont donnés avec une précision de ± 2 % absolus.

Tableau I

| Echantillon | Absorption d'eau (%) | |
|---|---|---|
| | 2 heures | 24 heures |
| Série 1 : Plâtre témoin | 38 | 40 |
| Série 2 : Plâtre + 0,3 % de H 68[a] | 3 | 9 |
| Série 3 : Plâtre + 0,1 % de H 68[a] | 37 | 39 |
| Série 4 : Plâtre + 0,1 % de H68[a] + 0,2 % de RH 148[b] | 1 | 5 |

[a] H 68 signifie le RHOXIMAT H 68
[b] RH 148 signifie le RHOXIMAT RH 148

On a bien constaté une amélioration des propriétés hydrofugeantes du plâtre additivé de quantités réduites de RHOXIMAT H 68 et de guar RHOXIMAT RH 148, et ce de façon durable sur au moins 24 heures.
Il appraît clairement du Tableau I qu'une simple réduction de quantité de H 68, en l'absence de l'hydroxypropyle guar, ne donne pas les propriétés hydrofugenates désirées.

**Exemple 2**

Matériel :

Le matériel ainsi que le mode opératoire de l'exemple 1 sont repris à l'identique dans cet exemple.

Produits :

Quatre séries de trois éprouvettes de plâtre sont préparées avec 3600 g de plâtre ($CaSO_4.1/2H_2O$).
La série 1 est le plâtre témoin (sans hydrofugeant).
La série 2 est additionnée de 0,5 % en poids par rapport à la poudre de plâtre d'une émulsion à 60 % polyméthylhydrogénosiloxane bloqué en bout de chaîne par des groupes méthyles de formule $(CH_3)_3$-Si-O-[SiH($CH_3$)-O]$_x$-Si$(CH_3)_3$ avec $45 \leq x \leq 80$ ; appelé également RHOXIMAT HD 879.
La série 3 est additionnée de 0,17 % en poids par rapport à la poudre de plâtre d'une émulsion à 60 % de RHOXIMAT HD 879.
La série 4 correspond à du plâtre additionné de 0,17 % en poids par rapport à la poudre de plâtre d'une émulsion à 60 % de RHOXIMAT HD 879, et de 0,2 % en poids par rapport à la poudre de plâtre de guar RHOXIMAT RH 148 appelé également le RH 148, qui est un hydroxypropyle guar de masse molaire d'environ 1 200 000 et de degré de substitution molaire d'environ 0,6.
Quelque soit l'échantillon préparé, la quantité d'eau ajoutée est telle que le rapport eau/plâtre reste toujours égal à 0,75.

Evaluation des propriétés hydrofuges de ces éprouvettes :

A la sortie de l'étuve, les éprouvettes de plâtre sont laissées refroidir à environ 23°C et 65 % d'humidité relative.
Elles sont immergées dans l'eau potable, sous une hauteur de 1 cm environ, et sont pesés toutes les heures pendant 8 heures, puis au bout de 24 heures.
Chaque formule est testée sur une série de 3 éprouvettes de plâtre.
Les résultats récapitulés dans le Tableau II, correspondent à la moyenne des 3 essais ; ils sont donnés avec une précision de ± 2 % absolus.

Tableau II

| Echantillon | Absorption d'eau (%) | |
|---|---|---|
| | 2 heures | 24 heures |
| Série 1 : Plâtre témoin | 35 | 37 |

Tableau II (suite)

| Echantillon | Absorption d'eau (%) | |
|---|---|---|
| | 2 heures | 24 heures |
| Série 2 : Plâtre + 0,5 % d'émulsion de HD 879[c] | 2 | 5 |
| Série 3 : Plâtre + 0,17 % d'émulsion de HD 879[c] | 6 | 26 |
| Série 4 : Plâtre + 0,17 % d'émulsion de HD 879[c]+ 0,2 % de RH 148 | 2 | 6 |

[c] HD 879 signifie le RHOXIMAT HD 879

On a bien constaté une amélioration des propriétés hydrofugeantes du plâtre additionné d'une émulsion de RHOXIMAT HD 879 + de RHOXIMAT RH 148, et ce de façon durable sur 24 heures.

## Revendications

**1.** Procédé d'hydrofugation de plâtre, **caractérisé en ce que** l'on ajoute au plâtre,

- au moins un composé (A) comprenant au moins un alkylhydrogénopolysiloxane linéaire et/ou cyclique de formules moyennes (I) et (II) :

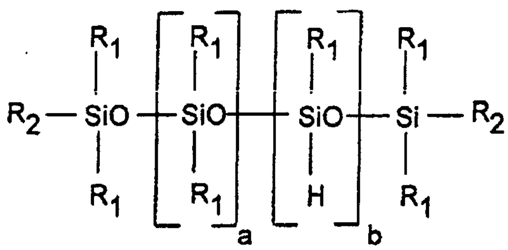

(I)

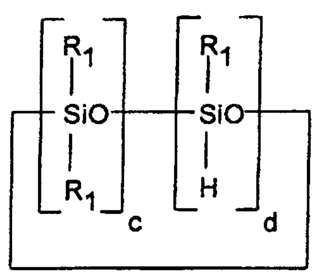

(II)

dans lesquelles :

- a et b sont des nombres entiers ou fractionnaires, définis comme :
  - ☐ $0 \leq a \leq 500$, de préférence $0 \leq a \leq 99$
  - ☐ $0 \leq b \leq 500$, de préférence $1 \leq b \leq 100$
  - ☐ $5 \leq a + b \leq 1000$, de préférence $10 \leq a + b \leq 150$
- c et d sont des nombres entiers ou fractionnaires, définis comme :
  - ☐ $0 \leq c \leq 5$, de préférence $0 \leq c \leq 3$
  - ☐ $1 \leq d \leq 10$, de préférence $1 \leq d \leq 5$
  - ☐ $3 \leq c + d \leq 10$, de préférence $3 \leq c + d \leq 5$

- $R_1$, identiques ou différents, représentent un radical hydrocarboné monovalent comportant 1 à 8 atomes de carbone choisi parmi :

  - ☐ les radicaux alkyles linéaires ou ramifiés, notamment les radicaux méthyle, éthyle, propyle, isopropyle, tertiobutyle, n-hexyle, n-octyle,
  - ☐ les radicaux insaturés phényle, éventuellement substitué par un radical méthyle et ou un radical éthyle,

- lorsque b > 0, $R_2$, identiques ou différents, représentent un radical hydrocarboné monovalent comportant 1 à 8 atomes de carbone choisi parmi :

  - ☐ les radicaux alkyles linéaires ou ramifiés, notamment les radicaux méthyle, éthyle, propyle, isopropyle; tertiobutyle, n-hexyle, n-octyle,
  - ☐ les radicaux insaturés phényle, éventuellement substitué par un radical méthyle et ou un radical éthyle,

- lorsque b = 0, au moins un des radicaux $R_2$, représente un atome d'hydrogène, les autres radicaux $R_2$, identiques ou différents, représentant un radical hydrocarboné monovalent comportant 1 à 8 atomes de carbone choisi parmi :

  - ☐ les radicaux alkyles linéaires ou ramifiés, notamment les radicaux méthyle, éthyle, propyle, isopropyle, tertiobutyle, n-hexyle, n-octyle,
  - ☐ les radicaux insaturés phényle, éventuellement substitué par un radical méthyle et ou un radical éthyle.

- et au moins un hydrocolloïde (B) comprenant au moins un galactomannane.

**2.** Procédé selon la revendication 1, **caractérisé en ce que** l'on mélange une poudre de plâtre, au moins un composé (A) comprenant au moins un alkylhydrogénopolysiloxane, au moins un hydrocolloïde (B) comprenant au moins un galactomannane, et de l'eau.

**3.** Procédé selon l'une quelconque des revendications 1 à 2, **caractérisé en ce que** le composé (A) consiste en au moins un alkylhydrogénopolysiloxane linéaire de formule moyenne (I) dans laquelle :

- les radicaux $R_1$ et $R_2$ représentent les radicaux alkyles linéaires comportant 1 à 3 atomes de carbone choisis parmi les radicaux méthyle, éthyle, propyle, et de préférence le méthyle,
- a et b sont des nombres entiers ou fractionnaires, définis comme :

  - ☐ $0 \leq a \leq 99$, de préférence $0 \leq a \leq 50$
  - ☐ $1 < b \leq 100$, de préférence $10 \leq b \leq 80$
  - ☐ $10 < a + b \leq 150$, de préférence $20 < a + b \leq 100$

**4.** Procédé selon l'une quelconque des revendications 1 à 3, **caractérisé en ce que** le composé (A) consiste en au moins un alkylhydrogénopolysiloxane présentant une viscosité d'au plus 200 mPa.s, et de préférence de 5 à 50 mPa.s.

**5.** Procédé selon l'une quelconque des revendications 1 à 4, **caractérisé en ce que** les alkylhydrogénopolysiloxanes (A) présentent un pourcentage de motifs -H compris entre 0,05 à 5 % en poids d'hydrogène par rapport au poids du composé (A), et de préférence entre 0,3 et 2 % en poids.

**6.** Procédé selon l'une quelconque des revendications 1 à 5, **caractérisé en ce que** le composé (A) consiste en au moins un alkylhydrogénopolysiloxane sous forme d'une huile.

**7.** Procédé selon l'une quelconque des revendications 1 à 6, **caractérisé en ce que** le composé (A) est présent dans une quantité d'au plus 0,25 % en poids par rapport à la poudre de plâtre, et de préférence d'au plus 0,15 % en poids par rapport à la poudre de plâtre.

**8.** Procédé selon l'une quelconque des revendications 1 à 7, **caractérisé en ce que** l'hydrocolloïde (B) est un guar

non ionique dont au moins une partie des groupes hydroxyles est substituée par des groupes hydroxyalkyles dont le groupe alkyle contient de 2 à 4 atomes de carbone.

**9.** Procédé selon la revendication 8, **caractérisé en ce que** l'hydrocolloïde (B) est choisi parmi les hydroxyéthyles guars, les hydroxypropyles guars, et les hydroxybutyle guars.

**10.** Procédé selon l'une quelconque des revendications 8 ou 9, **caractérisé en ce que** le degré de substitution molaire des hydrocolloïdes (B) est d'au moins 0,2 jusqu'au plus 0,9, et de préférence le degré de substitution molaire est compris entre 0,3 et 0,7.

**11.** Procédé selon l'une quelconque des revendications 1 à 10, **caractérisé en ce que** la masse moléculaire de l'hydrocolloïde (B) varie entre 50 000 et 2 000 000, et de préférence entre 200 000 et 1 500 000.

**12.** Procédé selon l'une quelconque des revendications 1 à 11, **caractérisé en ce que** l'hydrocolloïde (B), en dispersion à 1 % dans l'eau présente une viscosité d'au plus 1500 mPa.s, et de préférence entre 500 et 1100 mPa.s.

**13.** Procédé selon l'une quelconque des revendications 1 à 12, **caractérisé en ce que** la teneur en hydrocolloïde (B) est comprise entre 0,05 % à 0,5 % en poids, de préférence entre 0,05 % et 0,3 % en poids, et plus particulièrement entre 0,10 % et 0,25 % en poids par rapport à la poudre de plâtre.

**14.** Procédé selon l'une quelconque des revendications précédentes, **caractérisé en ce que** l'on ajoute au plâtre, en outre, un agent fluidifiant ou dispersant et/ou un agent moussant.

**15.** Procédé selon l'une quelconque des revendications précédentes, **caractérisé en ce que** l'hydrocolloïde (B) est un solide.

**16.** Procédé d'hydrofugation de plâtre, **caractérisé en ce que** l'on ajoute au plâtre une composition comprenant :

- au moins un hydrocolloïde (B) comprenant au moins un galactomannane sous forme solide tel que défini à l'une quelconque des revendications 8 à 13, et
- au moins un composé (A) comprenant au moins un alkylhydrogénopolysiloxane tel que défini à l'une quelconque des revendications 1 à 7, sous forme d'huile pure, dilué en solution, en émulsion, ou sous forme de concentré émulsionnable.

**17.** Composition pulvérulente comprenant :

- au moins un hydrocotloïde (B) comprenant au moins un galactomannane tel que défini à l'une quelconque des revendications 8 à 13, et
- un solide à base d'au moins un composé (A) supporté, le composé (A) comprenant au moins un alkylhydrogénopolysiloxane tel que défini à l'une quelconque des revendications 1 à 7.

**18.** Objet moulé ou sous forme de carreaux ou de plaques obtenu à partir du plâtre hydrofugé selon le procédé tel que défini à l'une quelconque des revendications 1 à 16.

**19.** Produit comprenant au moins un composé (A) comprenant au moins un alkylhydrogénopolysiloxane tel que défini à l'une quelconque des revendications 1 à 7, et au moins un hydrocolloïde (B) comprenant au moins un galactomannane tel que défini à l'une quelconque des revendications 8 à 13, comme produit de combinaison pour une utilisation conjointe dans un procédé d'hydrofugation de plâtre.

## Claims

**1.** Process for rendering plaster damp-proof, **characterized in that**

- at least one compound (A), comprising at least one linear and/or cyclic alkylhydropolysiloxane of mean formulae (I) and (II):

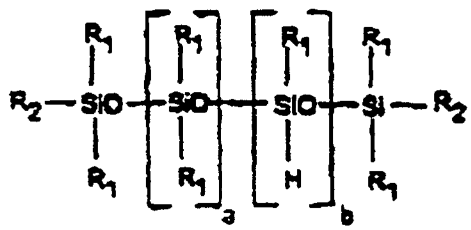

(I)

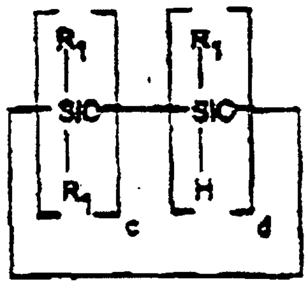

(II)

in which:

- a and b are integers or fractional numbers defined as:
  - $0 \leq a \leq 500$, preferably $0 \leq a \leq 99$
  - $0 \leq b \leq 500$, preferably $1 \leq b \leq 100$
  - $5 \leq a + b \leq 1000$, preferably $10 \leq a + b \leq 150$
- c and d are integers or fractional numbers defined as:
  - $0 \leq c \leq 5$, preferably $0 \leq c \leq 3$
  - $1 \leq d \leq 10$, preferably $1 \leq d \leq 5$
  - $3 \leq c + d \leq 10$, preferably $3 \leq c + d \leq 5$
- $R_1$, which are identical or different, represent a monovalent hydrocarbonaceous radical comprising 1 to 8 carbon atoms chosen from:
  - linear or branched alkyl radicals, in particular methyl, ethyl, propyl, isopropyl, tert-butyl, n-hexyl or n-octyl radicals,
  - unsaturated phenyl radicals, optionally substituted by a methyl radical and/or an ethyl radical,
- when $b > 0$, $R_2$, which are identical or different, represent a monovalent hydrocarbonaceous radical comprising 1 to 8 carbon atoms chosen from:
  - linear or branched alkyl radicals, in particular methyl, ethyl, propyl, isopropyl, tert-butyl, n-hexyl or n-octyl radicals,
  - unsaturated phenyl radicals, optionally substituted by a methyl radical and/or an ethyl radical,
- when $b = 0$, at least one of the $R_2$ radicals represents a hydrogen atom, the other $R_2$ radicals, which are identical or different, representing a monovalent hydrocarbonaceous radical comprising 1 to 8 carbon atoms chosen from:
  - linear or branched alkyl radicals, in particular methyl, ethyl, propyl, isopropyl, tert-butyl, n-hexyl or n-octyl radicals,
  - unsaturated phenyl radicals, optionally substituted by a methyl radical and/or an ethyl radical,

- and at least one hydrocolloid (B), comprising at least one galactomannan,

are added to the plaster.

2. Process according to claim 1, **characterized in that** at least one compound (A), comprising at least one alkylhydropolysiloxane, at least one hydrocolloid (B), comprising at least one galactomannan, and water are mixed with a plaster powder.

3. Process according to either one of claims 1 and 2, **characterized in that** the compound (A) comprises at least one linear alkylhydropolysiloxane of mean formula. (I), in which:

   - the! $R_1$ and $R_2$ radicals represent linear alkyl radicals comprising 1 to 3 carbon atoms chosen from methyl, ethyl and propyl radicals and preferably methyl,
   - a and b are integers or fractional numbers defined as:

     - $0 \leq a \leq 99$, preferably $0 \leq a \leq 50$
     - $1 < b \leq 100$, preferably $10 \leq b \leq 80$
     - $10 < a + b \leq 150$, preferably $20 < a + b \leq 100$.

4. Process according to any one of claims 1 to 3, **characterized in that** the compound (A) comprises at least one alkylhydropolysiloxane exhibiting a viscosity of at most 200 mPa·s and preferably of 5 to 50 mPa·s.

5. Process according to any one of claims 1 to 4, **characterized in that** the alkylhydropolysiloxanes (A) exhibit a percentage of -H units of between 0.05 and 5% by weight of hydrogen with respect to the weight of the compound (A) and preferably between 0.3 and 2% by weight.

6. Process according to any one of claims 1 to 5, **characterized in that** the compound (A) comprises at least one alkylhydropolysiloxane in the form of an oil.

7. Process according to any one of claims 1 to 6, **characterized in that** the compound (A) is present in an amount of at most 0.25% by weight with respect to the plaster powder and preferably of at most 0.15% by weight with respect to the plaster powder.

8. Process according to any one of claims 1 to 7, **characterized in that** the hydrocolloid (B) is a nonionic guar, at least a portion of the hydroxyl groups of which is substituted by hydroxyalkyl groups, the alkyl group of which comprises from 2 to 4 carbon atoms.

9. Process according to claim 8, **characterized in that** the hydrocolloid (B) is chosen from hydroxyethyl guars, hydroxypropyl guars and hydroxybutyl guars.

10. Process according to either one of claims 8 and 9, **characterized in that** the molar degree of substitution of the hydrocolloids (B) is from at least 0.2 to at most 0.9 and, preferably, the molar degree of substitution is between 0.3 and 0.7.

11. Process according to any one of claims 1 to 10, **characterized in that** the molecular mass of the hydrocolloid (B) varies between 50,000 and 2,000,000 and preferably between 200, 000 and 1,500,000.

12. Process according to any one of claims 1 to 11, **characterized in that** the hydrocolloid (B), as a 1% dispersion in water, exhibits a viscosity of at most 1500 mPa·s and preferably between 500 and 1100 mPa·s.

13. Process according to any one of claims 1 to 12, **characterized in that** the content of hydrocolloid (B) is between 0.05% and 0.5% by weight, preferably between 0.05% and 0.3% by weight and more particularly between 0.10% and 0.25% by weight with respect to the plaster powder.

14. Process according to any one of the preceding claims, **characterized in that**, in addition, a plasticizing or dispersing agent and/or a foaming agent is/are added to the plaster.

15. Process according to any one of the preceding claims, **characterized in that** the hydrocolloid (B) is a solid.

**16.** Process for rendering plaster damp-proof, **characterized in that** a composition comprising:

- at least one hydrocolloid (B), comprising at least one galactomannan in the solid form as defined in any one of claims 8 to 13, and
- at least one compound (A), comprising at least one alkylhydropolysiloxane as defined in any one of claims 1 to 7 in the form of a pure oil, an oil diluted in solution or an emulsified oil or in the form of an emulsifiable concentrate, is added to the plaster.

**17.** Pulverulent composition comprising:

- at least one hydrocolloid (B), comprising at least one galactomannan as defined in any one of claims 8 to 13, and
- a solid based on at least one supported compound (A), the compound (A) comprising at least one alkylhydropolysiloxane as defined in any one of claims 1 to 7.

**18.** Moulded item or item in the form of tiles or boards obtained from the plaster rendered damp-proof according to the process as defined in any one of claims 1 to 16.

**19.** Produce comprising at least one compound (A), comprising at least one alkylhydropolysiloxane as defined in any one of claims 1 to 7, and at least one hydrocolloid (B), comprising at least one galactomannan as defined in any one of claims 8 to 13, as combination product for joint use in a process for rendering plaster damp-proof.

**Patentansprüche**

**1.** Verfahren zur Hydrophobierung von Gips, **dadurch gekennzeichnet, daß** man dem Gips hinzufügt:

- mindestens eine Verbindung (A), umfassend mindestens ein lineares und/oder cyclisches Alkylhydrogenopolysiloxan der mittleren Formeln (I) und (II)

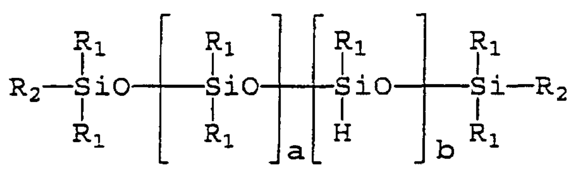

(I)

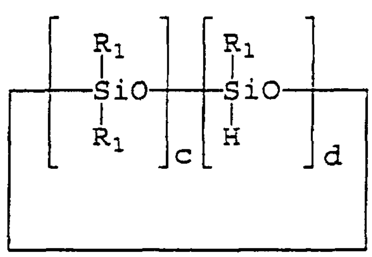

(II)

in denen

- a und b ganze oder gebrochene Zahlen sind, definiert als

  - $0 \leq a \leq 500$, vorzugsweise $0 \leq a \leq 99$
  - $0 \leq b \leq 500$, vorzugsweise $1 \leq b \leq 100$
  - $5 \leq a + b \leq 1000$, vorzugsweise $10 \leq a + b \leq 150$

- c und d ganze oder gebrochene Zahlen, sind, definiert als

- ☐ $0 \leq c \leq 5$, vorzugsweise $0 \leq c \leq 3$
- ☐ $1 \leq d \leq 10$, vorzugsweise $1 \leq d \leq 5$
- ☐ $3 \leq c + d \leq 10$, vorzugsweise $3 \leq c + d \leq 5$

■ die Reste $R_1$, gleich oder verschieden, einen monovalenten Kohlenwasserstoff-Rest mit 1 bis 8 Kohlenstoffatomen darstellen, ausgewählt unter:

- ☐ den linearen oder verzweigten Resten Alkyl, insbesondere den Resten Methyl, Ethyl, Propyl, Isopropyl, tert.-Butyl, n-Hexyl, n-Octyl,
- ☐ den ungesättigten Resten Phenyl, gegebenenfalls substituiert durch einen Rest Methyl oder einen Rest Ethyl,

■ wenn $b > 0$ ist, die Reste $R_2$, gleich oder verschieden, einen monovalenten Kohlenwasserstoff-Rest mit 1 bis 8 Kohlenstoffatomen darstellen, ausgewählt unter:

- ☐ den linearen oder verzweigten Resten Alkyl, insbesondere den Resten Methyl, Ethyl, Propyl, Isopropyl, tert.-Butyl, n-Hexyl, n-Octyl,
- ☐ den ungesättigten Resten Phenyl, gegebenenfalls substituiert durch einen Rest Methyl oder einen Rest Ethyl,

■ wenn $b = 0$ ist, mindestens einer der Reste $R_2$ ein Wasserstoffatom darstellt und die anderen Reste, gleich oder verschieden, einen monovalenten Kohlenwasserstoff-Rest mit 1 bis 8 Kohlenstoffatomen darstellen, ausgewählt unter:

- ☐ den linearen oder verzweigten Resten Alkyl, insbesondere den Resten Methyl, Ethyl, Propyl, Isopropyl, tert.-Butyl, n-Hexyl, n-Octyl,
- ☐ den ungesättigten Resten Phenyl, gegebenenfalls substituiert durch einen Rest Methyl oder einen Rest Ethyl ,

- und mindestens ein Hydrokolloid (B), umfassend mindestens ein Galactomannan.

**2.** Verfahren nach Anspruch 1, **dadurch gekennzeichnet, daß** man ein Gipspulver, mindestens eine Verbindung (A), umfassend mindestens ein Alkylhydrogenopolysiloxan, mindestens ein Hydrokolloid (B), umfassend mindestens ein Galactomannan, und Wasser vermischt.

**3.** Verfahren nach irgendeinem der Ansprüche 1 bis 2, **dadurch gekennzeichnet, daß** die Verbindung (A) aus mindestens einem linearen Alkylhydrogenopolysiloxan der mittleren Formel (I) besteht, in der

■ die Reste $R_1$ und $R_2$ lineare oder verzweigte Reste Alkyl mit 1 bis 3 Kohlenstoffatomen darstellen, ausgewählt unter den Resten Methyl, Ethyl, Propyl und vorzugsweise Methyl,

■ a und b ganze oder gebrochene Zahlen sind, definiert als

- ☐ $0 \leq a \leq 99$, vorzugsweise $0 \leq a \leq 50$
- ☐ $1 < b \leq 100$, vorzugsweise $10 \leq b \leq 80$
- ☐ $10 < a + b \leq 150$, vorzugsweise $20 < a + b \leq 100$

**4.** Verfahren nach irgendeinem der Ansprüche 1 bis 3, **dadurch gekennzeichnet, daß** die Verbindung (A) aus mindestens einem Alkylhydrogenopolysiloxan besteht, das eine Viskosität von höchstens 200 mPa.s und vorzugsweise von 5 bis 50 mPa.s aufweist.

**5.** Verfahren nach irgendeinem der Ansprüche 1 bis 4, **dadurch gekennzeichnet, daß** die Alkylhydrogenopolysiloxane (A) einen Prozentsatz an Struktureinheiten -H zwischen 0,05 und 5 Gew.-% Wasserstoff, bezogen auf das Gewicht der Verbindung (A), und vorzugsweise zwischen 0,3 und 2 Gew.-% aufweisen.

**6.** Verfahren nach irgendeinem der Ansprüche 1 bis 5, **dadurch gekennzeichnet, daß** die Verbindung (A) aus mindestens einem Alkylhydrogenopolysiloxan in Form eines Öles besteht.

**7.** Verfahren nach irgendeinem der Ansprüche 1 bis 6, **dadurch gekennzeichnet, daß** die Verbindung (A) in einer

Menge von höchstens 0,25 Gew.-%, bezogen auf das Gipspulver, und vorzugsweise höchstens 0,15 Gew.-%, bezogen auf das Gipspulver, anwesend ist.

**8.** Verfahren nach irgendeinem der Ansprüche 1 bis 7, **dadurch gekennzeichnet, daß** das Hydrokolloid (B) ein nicht ionisches Guar ist, bei dem mindestens ein Teil der Gruppen Hydroxyl durch Gruppen Hydroxyalkyl substituiert sind, deren Gruppe Alkyl 2 bis 4 Kohlenstoffatome enthält.

**9.** Verfahren nach Anspruch 8, **dadurch gekennzeichnet, daß** das Hydrokolloid (B) unter den hydroxyethylierten Guars, den hydroxypropylierten Guars und den hydroxybutylierten Guars ausgewählt wird.

**10.** Verfahren nach irgendeinem der Ansprüche 8 oder 9, **dadurch gekennzeichnet, daß** der molare Substitutionsgrad der Hydrokolloide (B) mindestens 0,2 bis höchstens 0,9 beträgt und vorzugsweise der molare Substitutionsgrad zwischen 0,3 und 0,7 liegt.

**11.** Verfahren nach irgendeinem der Ansprüche 1 bis 10, **dadurch gekennzeichnet, daß** die Molmasse des Hydrokolloids (B) zwischen 50000 und 2000000 und vorzugsweise zwischen 200000 und 1500000 variiert.

**12.** Verfahren nach irgendeinem der Ansprüche 1 bis 11, **dadurch gekennzeichnet, daß** das zu 1 % in Suspension in Wasser vorliegende Hydrokolloid eine Viskosität von höchstens 1500 mPa.s, vorzugsweise zwischen 500 und 1100 mPa.s aufweist.

**13.** Verfahren nach irgendeinem der Ansprüche 1 bis 12, **dadurch gekennzeichnet, daß** der Gehalt an dem Hydrokolloid (E) zwischen 0,05 Gew.-% und 0,5 Gew.-%, vorzugsweise zwischen 0;05 Gew.-% und 0,3 Gew.-%, und ganz besonders zwischen 0,10 Gew.-% und 0,25 Gew.-% beträgt, bezogen auf das Gipspulver.

**14.** Verfahren nach irgendeinem der verstehenden Ansprüche, **dadurch gekennzeichnet, daß** man außerdem zu dem Gips ein Fluidisierungsmittel oder Dispergierungsmittel und/oder ein Schäumungsmittel gibt.

**15.** Verfahren nach irgendeinem der vorstehenden Ansprüche, **dadurch gekennzeichnet, daß** das Hydrokolloid (B) ein Feststoff ist.

**16.** Verfahren zur Hydrophobierung von Gips, **dadurch gekennzeichnet, daß** man zu dem Gips eine Zusammensetzung gibt, umfassend:

- mindestens ein Hydrokolloid (B), das mindestens ein Galactomannan in fester Form umfaßt, wie in irgendeinem der Ansprüche 8 bis 13 definiert, und
- mindestens eine Verbindung (A), die mindestens ein Alkylhydrogenopolysiloxan umfaßt, wie in irgendeinem der Ansprüche 1 bis 7 definiert, in Form eines reinen Öles, in verdünnter Form in Lösung, in Emulsion oder in Form von emulgierbarem Konzentrat.

**17.** Pulverförmige Zusammensetzung, umfassend:

- mindestens ein Hydrokolloid (B), das mindestens ein Galactomannan umfaßt, wie in irgendeinem der Ansprüche 8 bis 13 definiert, und
- einen Feststoff auf der Basis von mindestens einer aufgetragenen Verbindung (A), wobei die Verbindung (A) mindestens ein Alkylhydrogenopolysiloxan umfaßt, wie in irgendeinem der Ansprüche 1 bis 7 definiert.

**18.** Gegenstand, gegossen oder in Form von Scheiben oder Platten, erhalten ausgehend von dem Gips, der gemäß dem in irgendeinem der Ansprüche 1 bis 16 definierten Verfahren hydrophobiert wurde.

**19.** Produkt, umfassend mindestens eine Verbindung (A), die mindestens ein Alkylhydrogenopolysiloxan umfaßt, wie in irgendeinem der Ansprüche 1 bis 7 definiert, und mindestens ein Hydrokolloid (B), das mindestens ein Galactomannan umfaßt, wie in irgendeinem der Ansprüche 8 bis 13 definiert, als Kombinationsprodukt für eine gemeinsame Verwendung in einem Verfahren zur Hydrophobierung von Gips.